# FASCICULE DE BREVET EUROPEEN

(11) **EP 3 349 139 B1**
(45) Date de publication et mention de la délivrance du brevet: **07.08.2024**
(21) Numéro de dépôt: 18150857.3
(22) Date de dépôt: 09.01.2018
(51) Int. Cl.: G06F 21/86, G06K 7/00

(54) **CORPS DE LECTEUR DE CARTES À MÉMOIRE SÉCURISÉ**
KÖRPER EINES KARTENLESEGERÄTS MIT GESICHERTEM SPEICHER
CARD READER BODY WITH SECURE MEMORY

(30) Priorité: 13.01.2017 FR 1750301
(43) Date de publication de la demande: 18.07.2018
(73) Titulaire: Banks and Acquirers International Holding, 75015 Paris (FR)
(72) Inventeur: BERTHIAUD, Olivier, 07130 CORNAS (FR); ANDRE, Jérôme, 26800 MONTOISON (FR); PAVAGEAU, Stéphane, 26600 LA ROCHE DE GLUN (FR); GRANDDIDIER, Yann, 07610 LEMPS (FR)
(74) Mandataire: Germain Maureau

(56) Documents cités:
- FR-A1- 2 889 756
- FR-A1- 2 983 995
- FR-A1- 2 997 570
- US-A1- 2013 140 364

## Description

### 1. Domaine de l'invention

L'invention se situe dans le domaine des lecteurs de cartes à mémoire. L'invention a plus particulièrement comme objet un lecteur de cartes à mémoire destiné à être monté dans un terminal de lecture de cartes à mémoire. Un tel terminal peut être un terminal de paiement, un terminal d'identification. Plus généralement, l'invention se rapporte à tout type de terminal pouvant comprendre un lecteur de cartes à mémoire.

### 2. Art Antérieur

Les terminaux de lecture de cartes à mémoire comprennent, outre un lecteur de cartes à mémoire, un certain nombre de composants tels qu'un clavier, un écran, un ou plusieurs processeurs, de la mémoire, une source d'alimentation électrique. Depuis plusieurs années, les terminaux de lecture de cartes à mémoire ont vu leurs fonctions être multipliées. Ceci est particulièrement vrai pour les terminaux de paiement. Outre la fonction de paiement, les terminaux embarquent des fonctions de communication en réseau, des fonctions de détection de cartes à mémoire sans contact (cartes « contactless »), des fonctions de gestion de coupons (par exemple des coupons de fidélité), etc.

En plus de la multiplication de ces fonctions auxiliaires, les terminaux de lecture de cartes à mémoire doivent de plus être résistants aux diverses attaques ou tentatives de fraudes dont ils sont fréquemment l'objet. Afin d'obtenir une homogénéité de la résistance des terminaux aux attaques, des normes internationales ont été édictées. Dans le domaine du paiement, par exemple, la norme PCI PED *(« Payment Card Industry* - *Pin Entry Device »)* édicte des exigences en matière d'intrusion et de détection des tentatives d'attaques sur les terminaux. Il ne s'agit pas de la seule norme en vigueur.

Cependant, du fait de ces normes, les terminaux qui étaient antérieurement peu protégés laissent progressivement la place à des terminaux de plus en plus sécurisés. Parmi les points de sécurisation des terminaux, les industriels du secteur veillent plus particulièrement à la protection du lecteur de cartes à mémoire. Le lecteur de cartes à mémoire, en effet, reste un maillon faible du terminal de lecture de cartes à mémoire. Ceci est dû au fait que le lecteur de cartes à mémoire comprend une fente d'insertion de la carte à mémoire, cette fente rendant l'intérieur du terminal accessible depuis l'extérieur. Plus particulièrement, des attaquants cherchent à se procurer un accès au connecteur de carte à mémoire. Le connecteur de carte à mémoire est la partie du lecteur de cartes à mémoire qui entre en contact avec la puce ou le microprocesseur embarqué sur la carte à mémoire. Lorsqu'un attaquant parvient à avoir accès à ce connecteur sans que quiconque s'en aperçoive, il lui est alors possible d'intercepter et de lire les données qui sont échangées entre la puce ou le microprocesseur de la carte et le processeur du terminal de lecture de cartes à mémoire. Parmi les données interceptées, on peut notamment citer le code secret saisi par le client lors de la demande de code secret, qui peut être véhiculé sans cryptage sur certaines cartes à puce non (ou mal) sécurisée.

Ceci explique que de nombreux efforts ont été portés à la sécurisation du lecteur de cartes à mémoire. Ainsi, par exemple, les lecteurs de cartes à mémoire ont été pourvus d'une protection avec treillis. Cette protection permet d'éviter une introduction par perçage du terminal. Lorsqu'un objet tente de pénétrer dans l'enceinte de protection, un court-circuit est produit entraînant alors une mise hors service du terminal. Par ailleurs, des modifications visant à protéger les connecteurs de carte à mémoire contre les décharges électrostatiques et contre l'usure ont également été proposées. Il s'agit par exemple de disposer, à l'entrée du lecteur de cartes à mémoire, des pièces métalliques assurant le guidage mécanique (prévention contre l'usure) et/ou la décharge de la carte préalablement à son insertion dans le lecteur de cartes à mémoire. Communément, ces pièces métalliques se présentent sous la forme de tiges métalliques de guidage de quelques millimètres de hauteur. Un autre exemple consiste à ajouter des pièces métalliques qui se présentent sous la forme d'un peigne de décharge de la carte.

Toutes ces modifications ont entrainé une complexité de fabrication importante. Par ailleurs, le coût de fabrication a également augmenté. Actuellement, les exigences normatives en matière de sécurité sont telles qu'il est nécessaire de prévoir, pour la fabrication d'un terminal de lecture, de nombreuses étapes qui mêlent à la fois les soudures échelonnées de composants, la nécessité de disposer de composants résistants à la refusion, etc. Outre la complexité de fabrication du terminal de lecture de cartes à mémoire, ces procédés rendent la maintenance des terminaux produits très complexe voire impossible, suscitant ainsi bien des difficultés pour les prestataires de services de maintenance autant que pour le fabricant du terminal de lecture de cartes à mémoire.

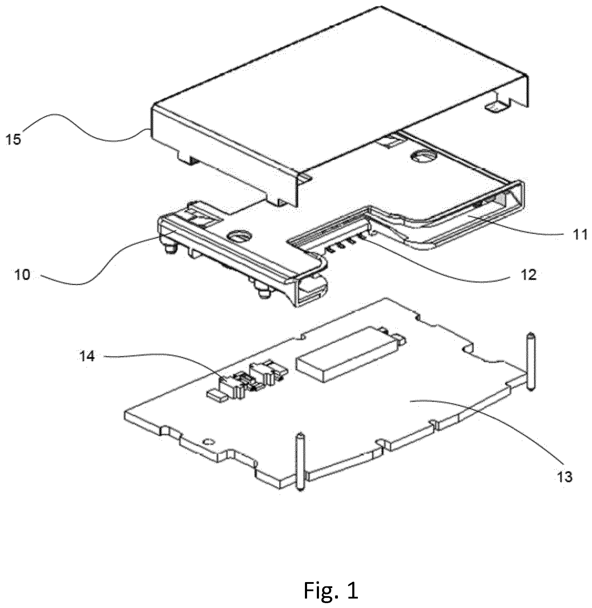

On décrit, en relation avec la figure 1, un assemblage classique d'un lecteur de cartes à mémoire. Ce lecteur de cartes à mémoire comprend un corps de lecteur de cartes à mémoire 10, comprenant une fente d'insertion d'une carte à mémoire 11. Le connecteur de carte à mémoire est directement intégré au sein du lecteur de cartes à mémoire. Il comprend des pins 12 de connexion à un circuit imprimé 13 (vue partielle) permettant d'assurer le fonctionnement du lecteur et son interconnexion avec les autres composant du dispositif au sein duquel il est installé (ce circuit imprimé 13 est généralement la carte mère du terminal de lecture de cartes à mémoire). A ce titre, le circuit imprimé 13 comprend également des composants électroniques 14. Pour protéger le lecteur de cartes à mémoire 10, celui-ci est recouvert d'une protection complète 15, ainsi que d'une protection frontale (non représentée).

Il était donc nécessaire de proposer une architecture de lecteur de cartes à mémoire qui soit intrinsèquement sécurisée, mais qui soit plus facile à assembler. Une telle architecture a par exemple été divulguée dans la demande de brevet FR2997530, publiée le 02 mai 2014. Cette demande de brevet décrit plus particulièrement un corps de lecteur de cartes à mémoire de forme globalement parallélépipédique rectangle, comprenant une fente d'insertion d'une carte à mémoire. Le corps du lecteur de cartes à mémoire comprend, sur une face postérieure, un logement de réception d'un connecteur de carte à mémoire, ce logement de réception étant d'une forme volumique prédéterminée et comprenant une piste conductrice prenant la forme d'un treillis. Ainsi, la solution décrite dans cette demande de brevet FR2997530 présente plusieurs avantages. D'une part le montage est facilité, du fait que le connecteur de carte à mémoire n'est plus directement intégré au corps du lecteur de cartes à mémoire : cette configuration permet en effet de souder d'abord le connecteur de carte à mémoire sur la carte mère du terminal de lecture puis de fixer ensuite le corps du lecteur de cartes à mémoire sur la carte mère en recouvrant le connecteur de carte à mémoire. D'autre part il n'est plus nécessaire de prévoir une protection complémentaire, le treillis de protection étant directement intégré au logement de réception du connecteur. Ce treillis est plus particulièrement réalisée avec la technique de gravure au laser dite LDS (de l'anglais *« Laser Direct Structuring »*). Cette technique présente néanmoins des inconvénients, notamment en termes de passage à l'échelle industrielle et de coûts : en effet, le fait de devoir tracer une piste en MID (de l'anglais « Molded Interconnected Device ») sur une pièce plastique existante, avec des formes et des volumes complexes est délicat, du fait de la difficulté d'accès, par le laser, à certaines zones. Ceci entraine notamment un allongement du temps nécessaire à la création de la pièce et une augmentation des coûts. Il existe donc un besoin d'une architecture de lecteur de cartes à mémoire qui offre une simplification accrue en termes de production et d'assemblage des différents éléments qui le constitue (et en particulier en ce qui concerne le corps du lecteur de cartes à mémoire), tout en garantissant un niveau de sécurisation élevé du lecteur une fois ce dernier assemblé. Le document US 2013/0140364 divulgue un lecteur de carte dans un terminal de paiement pour une station service. Deux PCBs contiennent un treillis et sont montés sur les faces extérieures du corps de carte et sont maintenus par un PCB transversal. Un capot en plastique vient maintenir le tout.

Le document FR 2 889 756 divulgue un corps de carte en plastique moulé, sur lequel est collé ou fixé un treillis (plusieurs densité sont représentées) qui peut s'étendre sur toute la face du corps de carte. Les faces intérieure ou extérieure sont considérées dans des exemples de réalisation différents.

### 3. Résumé de l'invention

L'invention est définie par les revendications indépendantes. Plusieurs exemples de réalisation sont donnés dans les revendications dépendantes. présente technique permet de résoudre en partie les problèmes posés par l'art antérieur. La présente technique se rapporte en effet à un corps de lecteur de cartes à mémoire comprenant une fente d'insertion d'une carte à mémoire et un logement de réception d'un connecteur de carte à mémoire, ledit corps de lecteur comprenant un capot supérieur et une base inférieure. Un tel un corps de lecteur de cartes à mémoire se distingue cependant des corps de lecteur connus par le fait qu'il comprend une troisième partie, distincte de la base inférieure ou du capot supérieur. Cette troisième partie prend la forme d'un circuit imprimé fixé sur une face supérieure dudit capot supérieur, ledit circuit imprimé comprenant au moins un élément de protection.

Ainsi, l'architecture en trois parties proposée permet la mise en oeuvre d'un corps de lecteur de cartes à mémoire moins coûteux et plus facile à produire vis-à-vis des solutions de l'art antérieur, mais qui offre néanmoins un niveau de protection élevé contre les tentatives frauduleuses d'accès à des signaux sensibles au sein du lecteur. En particulier, il n'est plus nécessaire de recourir à des techniques complexes et coûteuse de gravure LDS et à la production de pièces en MID : le circuit imprimé peut prendre la forme d'un circuit imprimé classique sur base époxy, dans la mesure où il est amené à être couplé au capot supérieur qui en augmente ainsi la résistance mécanique.

Cette architecture en trois parties permet également de faciliter le montage du lecteur de cartes à mémoire, tout en étendant les éléments de protection. En effet, de par la configuration du corps de lecteur de cartes à mémoire, l'invention permet de souder d'abord le connecteur de carte à mémoire sur un circuit imprimé, puis d'assembler ensuite les trois parties du corps du lecteur de cartes à mémoire en recouvrant le connecteur de carte à mémoire. La mise en oeuvre d'un corps de lecteur dont la fente d'insertion est formée au moyen de deux parties emboitables (base inférieure et capot supérieur) permet en outre d'implémenter de façon simple des caractéristiques complémentaires qui auraient été difficiles et/ou coûteuses à mettre en oeuvre avec un corps formé d'une seule pièce, de par la technicité de ces caractéristiques.

Le capot supérieur est en métal.

Ainsi, cette pièce peut être produite de manière simple, peu coûteuse et à grande échelle, par exemple par la mise en oeuvre de techniques connues de découpage et d'embossage de plaques métalliques. Par ailleurs, un capot supérieur en métal présente une résistance accrue vis-à-vis des solutions traditionnelles basées sur des matériaux plastiques : le lecteur de cartes à mémoire est ainsi plus robuste, et le circuit imprimé est renforcé par cette pièce métallique sur lequel il est fixé. De cette manière, la fiabilité du lecteur est encore améliorée par rapport aux solutions de l'art antérieur.

Dans un mode de réalisation particulier, le circuit imprimé recouvre une majeure partie de la face supérieure du capot supérieur, et l'élément de protection s'étend sensiblement sur une majeure partie dudit circuit imprimé.

De cette manière, une sécurisation élevée est assurée à l'encontre de toute tentative d'intrusion par le capot supérieur du lecteur de cartes à mémoire.

Dans un mode de réalisation particulier, la densité de gravure dudit élément de protection est variable, en fonction de la localisation de l'élément de protection.

De cette manière, les coûts de production du circuit imprimé peuvent encore être réduits, tout en garantissant la conservation d'un niveau de sécurisation élevé du lecteur de cartes à mémoire. Par ailleurs, les zones de fortes densités de gravure, dont la fiabilité est parfois altérée lors de conditions climatiques sévères (par exemple dans des conditions de chaleur et d'humidité élevées), peuvent être circonscrites à des zones bien limitées en terme de localisation. La fiabilité générale du lecteur est ainsi encore améliorée.

Dans un autre mode de réalisation particulier de la technique proposée, le capot supérieur comprend au moins une bosse s'étendant sensiblement perpendiculairement à la face supérieure du capot supérieur.

Ces bosses forment des surfaces d'appui du circuit imprimé, une fois ce dernier positionné sur le capot supérieur. Ainsi, elles offrent des points de fixation privilégiés du circuit imprimé. Elles permettent par ailleurs de surélever le circuit imprimé vis-à-vis du capot supérieur. De cette manière, les deux faces du circuit imprimé peuvent être exploitées pour l'installation de composants électroniques. Cette surélévation permet par ailleurs de ménager suffisamment d'espace pour que le connecteur de carte à mémoire puisse prendre place sous le circuit imprimé, et être ainsi mieux sécurisé. Enfin, ces bosses renforcent la résistance mécanique du capot supérieur, qui devient ainsi plus résistant au pliage par exemple.

Dans un mode de réalisation particulier, le capot supérieur comprend, à proximité d'un orifice traversant ledit capot supérieur, au moins une languette métallique s'étendant sensiblement perpendiculairement à une face inférieure du capot supérieur.

De cette manière, ces languettes métalliques forment des chicanes passives, c'est à dire des obstacles physiques visant à complexifier, au sein du lecteur de cartes à mémoire assemblé, un accès frauduleux aux zones où transitent des signaux sensibles.

Dans encore un autre mode de réalisation particulier, le capot supérieur comprend au moins un mécanisme d'atterrissage carte.

Ainsi, l'usure des contacts de la carte à mémoire et des lames métalliques du connecteur est limitée lors des multiples insertions et retraits de cartes à mémoire dans le lecteur.

Dans un mode de réalisation particulier, ce mécanisme d'atterrissage carte comprend un contre-appui mobile, et le capot supérieur comprend un logement d'accueil dudit contre-appui mobile, ledit contre-appui mobile étant mobile entre deux positions :
- une position de lecture, dans laquelle ledit contre-appui mobile exerce une pression sur une carte à mémoire insérée dans la fente d'insertion du lecteur de cartes à mémoire ;
- une position d'attente, dans laquelle ledit contre-appui mobile est au moins partiellement disposé dans ledit logement d'accueil.

Dans un mode de réalisation particulier, ledit logement d'accueil du contre-appui mobile prend la forme d'un orifice au sein dudit capot supérieur.

De cette manière, la compacité du corps du lecteur de cartes à mémoire est préservée sans sacrifier à la sécurisation, le circuit imprimé faisant alors office de couvercle de protection, ou toit de protection, pour le logement d'accueil du contre-appui mobile, et donc pour le mécanisme d'atterrissage carte dans son ensemble.

Dans un mode de réalisation particulier, la base inférieure comprend au moins un dispositif de freinage de carte.

Dans un mode de réalisation particulier, la base inférieure comprend au moins une zone de décharge électrostatique.

Selon un autre aspect, la technique proposée se rapporte également à un terminal de lecture de cartes à mémoire qui comprend un corps de lecteur de cartes à mémoire tel que présenté préalablement.

Selon encore un autre aspect, la technique proposée se rapporte également à un procédé d'assemblage d'un corps de lecteur de cartes à mémoire tel que précédemment décrit. Un tel procédé comprend :
- une étape de fixation d'un connecteur de carte à mémoire sur une carte mère ;
- une étape de pose de la base inférieure sur ledit connecteur de carte à mémoire ;
- une étape d'assemblage du capot supérieur sur ladite base inférieure ;
- une étape de fixation du circuit imprimé sur la face supérieure dudit capot supérieur.

De cette manière, l'assemblage et la fixation du lecteur de cartes à mémoire sur la carte mère sont simplifiés et peuvent être réalisés en un nombre très restreint d'étapes.

Les différents modes de réalisation mentionnés ci-dessus sont combinables entre eux pour la mise en oeuvre de l'invention.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1, déjà décrite en relation avec l'art antérieur, présente une architecture classique d'un lecteur de cartes à mémoire ;
- la figure 2a est une vue en éclaté illustrant le principe général de l'invention, à savoir la séparation du corps d'un lecteur de cartes à mémoire en trois parties principales distinctes ;
- la figure 2b montre un lecteur de cartes à mémoire selon un mode de réalisation particulier de la technique proposée, une fois le corps du lecteur assemblé ;
- la figure 3a présente une vue en perspective du capot supérieur d'un lecteur de cartes à mémoire, montrant plus particulièrement sa face supérieure dans un mode de réalisation particulier;
- la figure 3b présente une vue en perspective du capot supérieur, montrant plus particulièrement sa face inférieure dans un mode de réalisation particulier ;
- la figure 3c présente une vue en perspective d'un circuit imprimé fixé sur un capot supérieur, dans un mode de réalisation particulier ;
- la figure 3d illustre schématiquement un autre mode de réalisation particulier du capot supérieur, dans lequel le capot supérieur comprend un mécanisme d'atterrissage carte ;
- la figure 4 montre un exemple de connecteur de carte à mémoire selon un mode de réalisation particulier de la technique proposée ;
- la figure 5 illustre un exemple de chicane passive apte à être soudée sur un circuit imprimé, dans un mode de réalisation particulier de la technique proposée ;
- la figure 6a présente une vue en perspective de la base inférieure d'un lecteur de cartes à mémoire, montrant plus particulièrement sa face supérieure dans un mode de réalisation particulier ;
- la figure 6b présente une vue en perspective de la base inférieure, montrant plus particulièrement sa face inférieure dans un mode de réalisation particulier;
- la figure 7 illustre les principales étapes d'un procédé d'assemblage d'un lecteur de cartes à mémoire, selon un mode de réalisation particulier de l'invention.

### 5. Description détaillée

### 5.1. Principe général

Le principe général de l'invention consiste à proposer une architecture de lecteur de cartes à mémoire qui repose sur une séparation du lecteur en deux parties ou unités fonctionnelles distinctes :
- une première partie - qui correspond au connecteur de carte à mémoire - par laquelle transitent les signaux de cartes à mémoire, qui comprend également des moyens de détection de présence d'une carte à mémoire (désignés sous le terme de « switch »), et qui peut également assurer une partie de la décharge électrostatique ;
- une deuxième partie - qui correspond au corps du lecteur de cartes à mémoire - permettant l'insertion de la carte à mémoire, assurant d'une part le guidage et les reprises d'effort de la carte à mémoire, d'autre part une partie de la décharge électrostatique de la carte, et aussi une protection des signaux échangés entre la carte à mémoire et le connecteur de carte à mémoire.

Selon la technique proposée, le corps du lecteur de cartes à mémoire est lui-même formé de trois parties principales distinctes : une base inférieure, un capot supérieur, et un circuit imprimé comprenant un ou plusieurs éléments de protection qui s'étendent sur une portion significative de sa surface. La base inférieure et le capot supérieur sont emboitables l'un dans l'autre et forment, une fois assemblés, une fente d'insertion d'une carte à mémoire. Le capot supérieur et le circuit imprimé sont par ailleurs conformés et dimensionnés de manière à ce que le circuit imprimé puisse être fixé sur le capot supérieur.

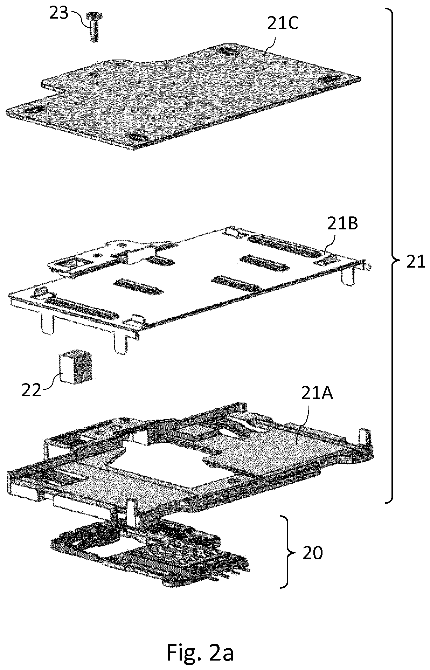

Le principe général de l'invention est décrit plus en détail en relation avec la **figure 2a****.** Selon la technique proposée, un connecteur de carte à mémoire 20 est construit indépendamment d'un corps du lecteur de cartes à mémoire 21. Le connecteur de carte à mémoire 20 est conçu afin de permettre une lecture des signaux émanant de la carte à mémoire (non représentée). Pour ce faire, le connecteur de carte à mémoire 20 comprend un certain nombre de pins (huit sur la figure 2a), permettant d'entrer en contact avec des zones correspondantes de la puce de la carte à mémoire (généralement six ou huit zones, selon le type de carte à mémoire). Ces pins sont en général des lames ressort métalliques qui se positionnent sur la surface de la puce. Le connecteur de carte à mémoire 20 est par ailleurs destiné à être connecté à un circuit imprimé principal (non représenté), typiquement la carte mère du terminal de lecture au sein duquel il est installé, afin d'assurer le fonctionnement du lecteur et son interconnexion avec les autres composants du terminal de lecture. Dans la suite du document, ce circuit imprimé principal, sur lequel est par exemple soudé le connecteur 20, est désigné sous le terme de « carte mère », afin d'éviter toute confusion avec le circuit imprimé du corps de lecteur de carte à mémoire selon la technique proposée, qui recouvre le capot supérieur. Il convient cependant de noter que le terme « carte mère » ne doit pas être entendu dans un sens restrictif, et que dans certains modes de réalisation le circuit imprimé principal n'est pas nécessairement la carte mère du terminal de lecture. L'objet de la divulgation n'étant pas le connecteur de carte à mémoire, sa description détaillée ne sera pas réalisée plus en avant.

Le connecteur de carte à mémoire 20 est indépendant du corps du lecteur de cartes à mémoire 21. En d'autres termes, le connecteur de carte à mémoire 20 n'est pas assemblé avec le corps du lecteur de cartes à mémoire 21 avant d'être assemblé à la carte mère du terminal de lecture : selon la technique proposée, le connecteur de carte à mémoire 20 est fixé en premier lieu sur la carte mère, puis le corps du lecteur de cartes à mémoire 21 est assemblé par-dessus le connecteur 20.

Comme décrit précédemment, le corps du lecteur de cartes à mémoire 21 comprend lui-même trois parties principales : une base inférieure 21A, un capot supérieur 21B, et un circuit imprimé 21C, dit circuit imprimé, qui surmonte le capot supérieur 21B. La base inférieure 21A comprend un logement de réception du connecteur de carte à mémoire 20. Ce logement prend la forme d'un orifice traversant la base inférieure 21A de part en part, et dans lequel le connecteur 20 vient se loger lorsque la base inférieure 21A est positionnée sur la carte mère. En d'autres termes, le connecteur de carte à mémoire 20 est tout d'abord fixé à la carte mère, puis la base inférieure 21A du corps du lecteur de cartes à mémoire est positionné sur la carte mère dans un deuxième temps, autour du connecteur précédemment installé. Le capot supérieur 21B est ensuite assemblé sur la base inférieure 21A, de manière à former la fente d'insertion d'une carte à mémoire au sein du lecteur. Enfin, le circuit imprimé 21C est fixé sur la face supérieure du capot supérieur, de manière à en recouvrir une majeure partie, idéalement l'intégralité. Alternativement, le bloc formé par le capot supérieur 21B et le circuit imprimé 21C peut avoir été pré-assemblé, en amont de la phase de montage du lecteur de cartes à mémoire. Dans ce cas, c'est l'ensemble de ce bloc pré-assemblé qui est positionné sur la base inférieure 21A lors du montage du lecteur.

Le circuit imprimé 21C comprend au moins un élément de protection, qui se présente par exemple sous la forme d'un ou de plusieurs treillis de détection d'intrusion ou sous la forme d'une ou de plusieurs pistes continues de détection d'intrusion (par exemple un circuit de masse, et deux treillis à des potentiels différents). Ce ou ces éléments de protection sont positionnés de sorte à couvrir une majeure partie de la surface du circuit imprimé 21C. Idéalement, ils sont répartis sur toute la surface du circuit imprimé 21C, de manière à assurer une sécurisation accrue du lecteur de cartes à mémoire.

Cette architecture en trois parties du corps du lecteur de cartes à mémoire 21 présente de nombreux avantages vis-à-vis des solutions de l'art antérieur.

En effet, l'assemblage et la fixation du lecteur de cartes à mémoire sur la carte mère sont simplifiés et peuvent être réalisés en un nombre restreint d'étapes. La mise en oeuvre d'un corps de lecteur dont la fente d'insertion est formée au moyen de deux parties emboitables (base inférieure et capot supérieur) permet en outre d'implémenter de façon simple des caractéristiques complémentaires qui auraient été difficiles et/ou coûteuses à mettre en oeuvre avec un corps formé d'une seule pièce, de par la technicité de ces caractéristiques. Des exemples de telles caractéristiques sont détaillés ultérieurement, en relation avec la présentation d'un mode de réalisation particulier de la technique proposée.

Par ailleurs, le couplage entre un capot supérieur et un circuit imprimé permet d'obtenir un compromis intéressant entre niveau de sécurisation du lecteur une fois assemblé d'une part, et complexité et coût de production des pièces le composant d'autre part, notamment lorsque cette solution est comparée aux solutions antérieures complexes basées sur la production de pièces en MID au moyen de techniques LDS par exemple. En effet, avec la technique proposée, le circuit imprimé peut prendre la forme d'un circuit imprimé classique sur support époxy, dont la robustesse est renforcée par l'épaisseur du capot supérieur sur lequel il est fixé. De manière préférentielle, le capot supérieur est en métal. Ainsi, il présente une résistance mécanique accrue vis-à-vis des solutions traditionnelles basées sur des matériaux plastiques, tout en offrant l'avantage de pouvoir être produit à grande échelle et à moindre coût grâce à la mise en oeuvre de techniques connues de découpage et d'embossage de plaques métalliques par exemple.

Par la suite, on décrit un mode de réalisation spécifique de l'invention, étant entendu que ce mode de réalisation ne limite en rien la portée de l'invention. Plus particulièrement, dans d'autres modes de réalisation de l'invention, les formes de la base inférieure et du capot supérieur et leurs moyens d'assemblage respectifs ne sont pas limités à ceux décrits par la suite.

### 5.2. Description détaillée d'un mode de réalisation

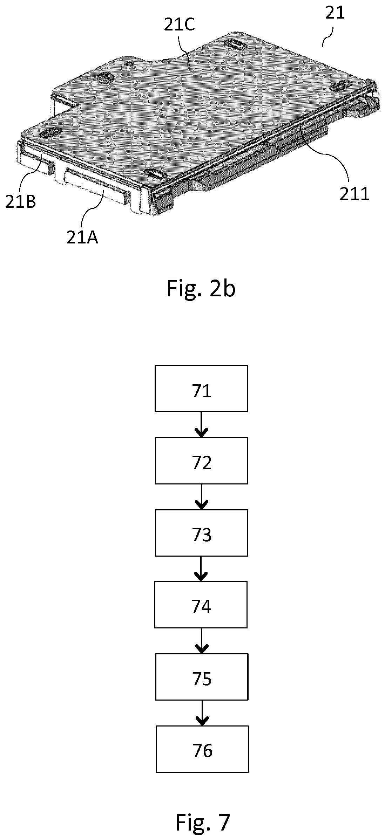

Ce mode de réalisation est présenté plus particulièrement en relation avec les figures 2b à 7. Ce mode de réalisation comprend des caractéristiques non décrites précédemment. En revanche, des références numériques identiques sont utilisées pour les éléments qui ont déjà été décrits dans la figure 2a.

La **figure 2b** montre un exemple de corps de lecteur de cartes à mémoire selon la technique proposée, une fois assemblé. Dans ce mode de réalisation, le corps du lecteur de cartes à mémoire 21 est une pièce de forme globalement parallélépipédique rectangle, d'une largeur d'environ cinquante-cinq millimètres, d'une profondeur d'environ trente-deux millimètres (hors zone de connexion du connecteur élastomère de type Zébra, qui sera présenté par la suite) et d'une hauteur d'environ quatre millimètres. Comme décrit précédemment en relation avec la figure 2a, ce corps 21 comprend une base inférieure 21A et un capot supérieur 21B. La base inférieure 21A et le capot supérieur 21B disposent de moyens d'assemblage complémentaires. Assemblés, la base inférieure 21A et le capot supérieur 21B forment ensemble une fente d'insertion 211 qui permet d'insérer une carte à mémoire dans une position correcte pour qu'elle entre en contact avec le connecteur de carte à mémoire, une fois en position de butée. Cette fente d'insertion a une hauteur comprise entre 0.85 et 1.20 millimètres.

### 5.2.1 Capot supérieur et circuit imprimé

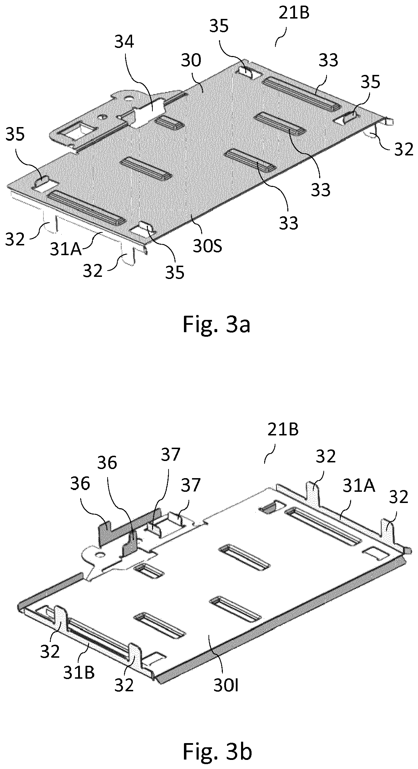

Le capot supérieur 21B du corps du lecteur de cartes à mémoire 21 est présenté plus en détail en relation avec les figures 3a et 3b**,** respectivement dans une vue en perspective de dessus et de dessous. Le capot supérieur 21B a une forme globalement parallélépipédique rectangle, avec une surface principale 30 globalement plane et rectangulaire et deux parois latérales (31A, 31B). Les parois latérales sont sensiblement perpendiculaires à la surface principale 30, et comprennent des moyens d'assemblage avec une base inférieure décrite ultérieurement. Ces moyens d'assemblage peuvent par exemple prendre la forme de pattes d'assemblage 32. La surface principale du capot supérieur 21B comprend une face supérieure 30S et une face inférieure 301. Une partie de la face inférieure 301 du capot supérieur 21B fait office de paroi supérieure de la fente d'insertion d'une carte à mémoire, une fois le corps du lecteur de cartes à mémoire assemblé. La face supérieure 30S, dans sa majeure partie ou dans sa totalité, sert quant à elle de surface d'accueil pour la fixation d'un circuit imprimé 21C, ledit circuit imprimé comprenant au moins un élément de protection. Dans un mode de réalisation, ce circuit imprimé 21C est rigide et repose par exemple sur un support de type époxy. Selon un mode de réalisation préférentiel de la technique proposée, le capot supérieur 21B est métallique. Sa forme peut alors par exemple être obtenue très simplement à partir d'une simple plaque métallique, au moyen de techniques usuelles de découpage et d'embossage. Les parois latérales (31A, 31B) et les pattes d'assemblage 32 peuvent par exemple être obtenue par simple pliage d'une telle plaque métallique préalablement découpée.

### Embossage

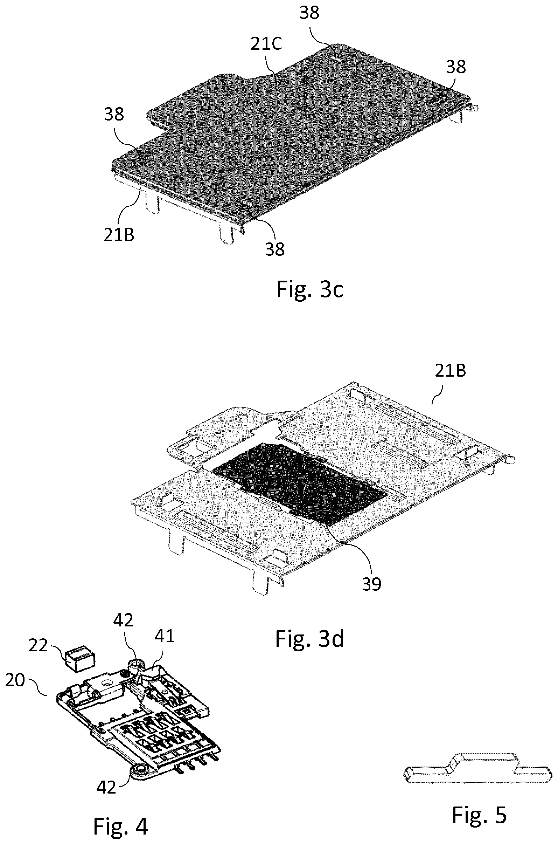

Dans un mode de réalisation particulier, le capot supérieur 21B est embossé de manière à présenter des bosses 33 qui forment un ensemble de protubérances sur sa face supérieure 30S (seules quelques bosses sont référencées sur la figure 3a, afin de ne pas surcharger la figure). Ces bosses 33, de forme sensiblement rectiligne, ont plusieurs fonctions. Elles servent en premier lieu de surfaces d'appui pour le circuit imprimé 21C. Elles permettent notamment une surélévation du circuit imprimé 21, qui favorise le glissement d'une carte à mémoire dans le lecteur en prévenant tout frottement de la carte à mémoire contre le circuit imprimé 21C. La hauteur de ces bosses 33 est par ailleurs dimensionnée de telle sorte que le circuit imprimé 21C soit suffisamment surélevé pour aménager un logement de réception de taille suffisante pour le connecteur 20. En effet, dans un mode de réalisation de la technique proposée, le capot supérieur 21B comprend un orifice 34 autorisant le passage d'une zone dite de contre-appui du connecteur de carte à mémoire 20, lorsque le lecteur est assemblé. Le circuit imprimé 21C doit donc être suffisamment surélevé pour permettre de réserver un espace suffisant à l'accueil de cette zone de contre-appui du connecteur 20. La **figure 4****,** qui présente un exemple de connecteur de carte à mémoire 20 selon la technique proposée, montre une telle zone de contre-appui 41 : elle correspond à une partie du connecteur 20 qui vise à protéger le switch de détection de présence carte. Cette zone de contre appui remplit deux fonctions. La première fonction est de permettre l'adaptation à l'épaisseur de la carte. En effet, le montage tel que proposé entraine une certaine tolérance quant à la hauteur du corps de lecteur de cartes à mémoire par rapport au connecteur de carte à mémoire. Cette zone de contre appui permet de gérer cette légère différence de hauteur en assurant que la carte ne sera pas déviée lors de son introduction. La deuxième fonction est de détecter l'insertion complète de la carte (système de switch). Cette deuxième fonction est par exemple remplie par l'utilisation d'une lame ressort métallique incluse dans la zone de contre appui 41. L'orifice 34 aménagé dans le capot supérieur 21B autorise le passage de la partie supérieure de la zone de contre-appui 41 du connecteur 20, ce qui permet d'obtenir un lecteur de cartes à mémoire compact (l'épaisseur du capot supérieur ne vient pas s'ajouter à celle du connecteur, dans la mesure ou l'orifice 34 précitée forme un logement pour l'accueil d'une partie de la zone la plus épaisse du connecteur, à savoir la zone de contre-appui 41), sans pour autant sacrifier la sécurisation (l'ensemble est toujours recouvert par le circuit imprimé).

En leur qualité de surfaces d'appui du circuit imprimé, les bosses 33 présentes sur le capot supérieur 21B peuvent également servir de surfaces de fixation du circuit imprimé sur le capot supérieur. Différents modes de réalisation sont alors envisageables pour assurer cette fixation. Lorsque le capot supérieur est métallique, le circuit imprimé 21C peut notamment être soudé sur le capot supérieur 21B au niveau de ces bosses 33, au moyen par exemple d'une technique de soudure refusion CMS (« Composants Montés en Surface). Il convient dans ce cas de prévoir à l'avance, sur le circuit imprimé 21C des formes, des emplacements et/ou des routages particuliers permettant d'assurer de telles soudures. En particulier, des plages de soudure à la masse sont nécessaires. Dans un autre mode de réalisation, la fixation peut être assurée par l'utilisation d'un adhésif double face, localisé au niveau des bosses 33 ou sur toute la surface principale du capot supérieur 21B. Dans ce cas, il n'est plus nécessaire de prévoir des routages particuliers sur le circuit imprimé 21C. D'autres modes de fixation du circuit imprimé sur le capot supérieur sont également prévus dans le cadre de la technique proposée, de manière complémentaire ou alternative à une fixation au niveau des bosses 33. Ainsi, dans un mode de réalisation particulier, le capot supérieur comprend au moins une lamelle métallique 35 s'étendant sensiblement perpendiculairement à sa surface principale 30, du côté de sa face supérieure 30S. Ces lamelles métalliques 35 ont par exemple été formées lors de l'embossage du capot supérieur 21B, lorsque ce dernier est en métal. Elles présentent une hauteur supérieure à celle des bosses 33. Dans ce mode de réalisation, le circuit imprimé 21C comprend des trous (ou vias) métallisés traversants, qui sont conformés et dimensionnés de sorte à ce que chacun d'eux soit en mesure d'accueillir une lamelle métallique 35 correspondante du capot supérieur 21B. La fixation du circuit imprimé sur le capot supérieur est alors assurée au moyen d'une soudure du type soudure de composants traversants. La forme et l'emplacement des trous peuvent avoir été prévus de manière à empêcher un montage incorrect du circuit imprimé sur le capot supérieur (ils font alors office non seulement de détrompeurs, mais également de points de centrage qui assureront un positionnement correct du circuit imprimé de manière à assurer une connexion fiable de ce circuit imprimé avec la carte mère en particulier lorsqu'une telle connexion est assurée par un connecteur élastomère de type Zebra). De tels trous métallisés 38 sont par exemple visibles sur la figure 3c**,** qui montre le circuit imprimé 21C une fois installé sur le capot supérieur 21B. Ces différents moyens de fixation du circuit imprimé sur le capot supérieur sont donnés à titre illustratif et non limitatif, et d'autres moyens de fixation, par exemple basés sur l'utilisation de colle, de vis, ou encore d'un polymère à réticulation, sont également envisageables. Dans certains modes de réalisation, des vis d'assemblage du lecteur de cartes à mémoire peuvent également être noyées dans le circuit imprimé 21C, toujours dans un objectif de compacité.

Les bosses 33 du capot supérieur ont par ailleurs un rôle de renfort : de par leur forme globalement rectiligne et leur répartition sur toute la surface principale 30 du capot supérieur, elles renforcent la robustesse du capot supérieur 21B. Il en résulte que ce dernier est plus résistant au pliage, par exemple. Par ailleurs, la fixation d'une pièce en métal (i.e. le capot supérieur 21B ainsi alvéolée par la présence de ces bosses 33) sur le circuit imprimé 21C (généralement en époxy, c'est à dire fin et relativement fragile) permet d'ajouter une rigidité important à l'ensemble du corps du lecteur de cartes à mémoire.

### Éléments de protection

Comme déjà exposé précédemment, le circuit imprimé 21C comprend au moins un élément de protection. Selon une caractéristique particulière, cet élément de protection (ou la pluralité d'éléments de protection) s'étend sensiblement sur toute la surface du circuit imprimé, et le circuit imprimé 21C est conformé et dimensionné de sorte qu'une fois fixé sur le capot supérieur 21B du corps du lecteur, il en recouvre toute la surface supérieure, ou du moins une majeure partie. De cette manière, la surface couverte par l'élément de protection est importante et permet de sécuriser le corps du lecteur de cartes à mémoire de manière efficace. La résistance mécanique du capot supérieur, notamment lorsqu'il est en métal, contribue à renforcer encore cette sécurisation. Par ailleurs, l'utilisation d'un circuit imprimé classique s'avère moins coûteuse et plus simple à mettre en oeuvre que d'autres techniques de l'art antérieur, comme celle consistant par exemple à utiliser des technologies MID et LDS pour tracer directement un élément de protection (prenant par exemple la forme d'un circuit) au sein du capot supérieur du corps du lecteur de cartes à mémoire. La solution proposée offre donc un compromis intéressant, car elle garantit un niveau de sécurisation important tout en étant moins complexe et moins coûteuse à mettre en oeuvre que les solutions de l'art antérieur. Avantageusement, le circuit imprimé 21C offre également une surface exploitable pour l'intégration, en plus du ou des éléments de protection, d'autres pistes et composants utiles pour assurer diverses autres fonctions annexes. A ce titre, la présence des bosses 33 sur le capot supérieur 21B peut également présenter un intérêt en ce sens que la surélévation du circuit imprimé obtenue permet d'exploiter également la face interne de ce circuit (celle qui fait face à la face supérieur 30S du capot supérieur) pour l'installation de divers composants électroniques.

Dans un mode de réalisation particulier, l'élément de protection se présente sous la forme de pistes électriques qui forment au moins un treillis de protection. Plusieurs densités de treillis peuvent être mises en oeuvre. Plus particulièrement, une zone à « forte densité » correspond à une protection immédiate (perçage direct au-dessus du connecteur pour accès aux signaux sensibles). Une zone de plus « faible densité » correspond à une protection contre des attaques indirectes (perçage, puis introduction d'objets en biais pour accéder aux signaux sensibles, tel que décrit précédemment). Une telle solution est avantageuse car elle permet de réduire le coût de fabrication du circuit imprimé sans toutefois nuire à la sécurité. La zone de plus faible densité se prête alors plus particulièrement à l'intégration éventuelle de pistes et composants permettant de réaliser les éventuelles fonctions annexes précédemment évoquées.

### Chicanes passives

La protection des signaux sensibles susceptibles d'être échangés au niveau du connecteur est également renforcée, dans un mode de réalisation particulier, par la mise en oeuvre de chicanes passives. Par « chicanes passives », on entend ici des formes qui permettent de complexifier, à l'intérieur du lecteur de cartes à mémoire assemblé, l'accès aux zones où transitent de tels signaux sensibles. Il s'agit donc de dispositifs de sécurisation passifs, qui viennent compléter la protection active par treillis par exemple. L'objectif de ces formes est par exemple de rendre plus difficile toute tentative d'introduction d'un outil visant à accéder à de telles zones sensibles. Ces chicanes passives peuvent être mises en oeuvre de différentes manières.

Ainsi, selon un mode de réalisation particulier, le capot supérieur comprend des chicanes passives, qui prennent la forme de languettes métalliques (36, 37) obtenues par exemple très simplement lors du découpage et de l'embossage réalisés pour former le capot supérieur en question. De telles languettes métalliques sont par exemple visibles sur la figure 3b. Ces languettes métalliques (36, 37) s'étendent sensiblement perpendiculairement à la face inférieure 30I du capot supérieur 21B. Elles sont conformées et dimensionnées de manière à faire office de bouclier physique autour des zones où transitent certains signaux sensibles. Elles sont par exemple positionnées autour de zones présentant une relative faiblesse en terme de sécurisation, telles que par exemple les zones d'orifices présents dans le capot supérieur 21B. La hauteur de ces languettes métalliques (36, 37) peut être variable, selon que les signaux sensibles à protéger soient situés dans des couches plutôt basses ou hautes du lecteur. Par exemple, sur la figure 3b, les chicanes passives 37 visent à protéger une zone « haute » proche du circuit imprimé, tandis que les chicanes passives 36 visent à protéger une zone « basse » proche de la carte mère, là où est soudé le connecteur de carte à mémoire. Ainsi, les languettes métalliques 36, sont par exemple positionnées au plus proche des composants de la carte mère, de manière à en renforcer la protection. Les languettes métalliques 37 sont pour leur part disposées autour d'un connecteur élastomère (de type Zebra par exemple) par lequel transitent les signaux alimentant le circuit imprimé 21C : un faux contact entre ces languettes 37 et un élément de protection du circuit imprimé 21C entraîne donc la détection d'intrusion.

D'autres types de chicanes passives peuvent être mises en oeuvre, complémentairement ou alternativement aux chicanes passives formées à même le capot supérieur métallique 21B. Ces chicanes passives supplémentaires prennent la forme de pièces de métal (dont un exemple est donné en relation avec la **figure 5**) soudées à plat à même la carte mère (ou à divers endroits sensibles du lecteur de cartes à mémoire) créant ainsi des obstacles robustes et difficiles à contourner en cas de tentative d'accès aux signaux sensibles.

### Mécanisme d'atterrissage carte

Dans un mode de réalisation particulier, le capot supérieur 21B comprend un mécanisme dit d'« atterrissage carte » (parfois également connu dans la littérature sous la dénomination de « contacts à atterrissage ») qui présente l'avantage de minimiser l'usure des contacts de la carte à mémoire et des lames métalliques du connecteur lors des multiples insertions et retraits de cartes à mémoire dans le lecteur. Dans ce mode de réalisation, présenté très schématiquement en relation avec la figure 3d**,** le mécanisme d'atterrissage carte comprend un contre-appui mobile 39, et le capot supérieur comprend un logement d'accueil dudit contre-appui mobile 39. Le contre-appui 39 est mobile entre deux positions : une position dite de lecture, et une position dite d'attente.

La position de lecture correspond à une position dans laquelle le contre-appui mobile 39 exerce une pression sur une carte à mémoire insérée dans la fente d'insertion du lecteur de cartes à mémoire. Cette position est la position de lecture d'une carte à mémoire par le lecteur. La pression est exercée en direction du connecteur, lorsque que la carte à mémoire est insérée complètement (autrement dit jusqu'à un point de butée) dans la fente d'insertion du lecteur de cartes à mémoire. Cette position assure un contact fiable entre les contacts de la carte et les lamelles métalliques du connecteur.

La position d'attente correspond à une position dans laquelle le contre-appui 39 mobile est au moins partiellement disposé dans son logement d'accueil au sein du capot supérieur. Cette position est occupée par le contre-appui mobile 39 lorsqu'aucune carte à mémoire n'est insérée dans le lecteur, ou lorsqu'une carte n'y est que partiellement insérée (autrement dit, le point de butée de la carte n'a pas encore été atteint). Le contre-appui mobile n'exerce alors pas de pression sur la carte, ou alors une pression très faible qui limite ou ne permet pas le contact entre les contacts de la carte et les lamelles métalliques du connecteur.

Selon une caractéristique particulière, le logement d'accueil du contre-appui mobile 39 peut prendre la forme d'un orifice dans le capot supérieur 21B. Une fois fixé, le circuit imprimé 21C joue alors un rôle de couvercle ou de « toit » pour ce logement d'accueil, en venant recouvrir et donc protéger cet orifice. De cette manière, le lecteur de cartes à mémoire reste compact sans sacrifier à la sécurisation. Alternativement, le capot supérieur 21B n'est pas ajouré, et le contre-appui mobile 39 vient se placer contre la paroi inférieure du capot supérieur ou dans un creux aménagé dans le capot supérieur, dans sa position d'attente. Une telle mise en oeuvre est plus robuste, mais nécessite une épaisseur accrue du capot supérieur et donc du lecteur de cartes à mémoire.

Si la fonction d'atterrissage carte est connue en soi, sa mise en oeuvre dans le cadre du présent mode de réalisation diffère donc des solutions de l'art antérieur dans lesquelles le mécanisme d'atterrissage carte constitue généralement un point de faiblesse pour la sécurisation du lecteur. En effet, avec la technique proposée, le circuit imprimé 21C protège complètement le mécanisme d'atterrissage carte en le recouvrant intégralement.

### 5.2.2 Base inférieure

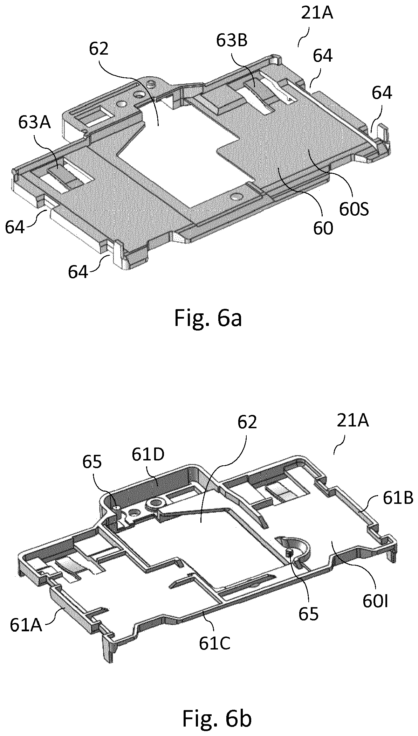

La base inférieure 21A du corps du lecteur de cartes à mémoire 21 est présentée plus en détail en relation avec les figures **6a et** 6b, respectivement dans une vue en perspective de dessus et de dessous, dans un mode de réalisation particulier de la technique proposée. La base inférieure 21A est de forme globalement parallélépipédique rectangle. Elle comprend également une surface principale 60, deux parois latérales (61A, 61B) et deux parois globalement longitudinale (61C, 61D). La face supérieure 60S de la surface principale 60 est la face en contact avec la carte à mémoire lors de son insertion dans le lecteur : cette face supérieure 60S est donc globalement lisse. La face inférieure 60I est la face qui est en contact avec la carte mère sur laquelle est connecté le connecteur du lecteur de cartes. Cette face inférieure 60I est structurée afin d'accueillir notamment des composants électroniques qui sont soudés sur la carte mère et que la base inférieure 21A vient recouvrir, assurant ainsi une certaine protection physique de ces composants. Ainsi, la hauteur des parois latérales (61A, 61B) et longitudinales (61C, 61D) est adaptée à la hauteur des composants électroniques qui prennent place sous la base inférieure 21A.

Comme déjà décrit précédemment, la base inférieure 21A comprend également un logement destiné à recevoir le connecteur de carte à mémoire lors du montage du lecteur de cartes à mémoire. Ce logement prend la forme d'un orifice 62 traversant la base inférieure 21A de part en part. La forme de ce logement de réception 62 est sensiblement complémentaire à la forme du connecteur de carte à mémoire 20. Dans un mode de réalisation particulier, la base inférieure 21A comprend des pions de centrage 65, permettant d'assurer un centrage correct de la base inférieure sur le connecteur 20 lors du montage (le connecteur de carte à mémoire 20 comprend alors des trous complémentaires 42, visibles sur la figure 4, destinés à accueillir ces pions de centrage 65 de la base inférieure). L'ensemble formé par le connecteur 20 entouré de la base inférieure 21A sera par la suite recouvert par le capot supérieur 21B, afin de former une fente d'insertion présentant l'espace nécessaire à la présence d'une carte à mémoire, ainsi qu'à d'éventuels autres composants électroniques.

Dans le mode de réalisation présenté, la base inférieure 21A du corps du connecteur a pour fonction principale d'assurer le guidage de la carte lors de son insertion dans le lecteur de cartes à mémoire. En outre, de manière astucieuse, dans au moins une variante, la base inférieure 21A comprend une ou plusieurs des caractéristiques suivantes :
- elle intègre des freins de carte permettant d'éviter les chocs sur les butées cartes ; de tels freins de carte sont présentés, à titre d'exemple, sur la base inférieure 21A illustrée en figure 6a et 6b : les freins de carte sont constitués, dans ce mode de réalisation, de deux lamelles en matière plastique (63A, 63B); chacune de ces lamelles forme un angle prédéterminé par rapport à la surface (plane) de guidage de la carte à mémoire ; en fonction des mode de réalisation, l'angle d'inclinaison d'une lamelle peut être différent de l'angle d'inclinaison de l'autre lamelle ; dans ce mode de réalisation, les freins (63A, 63B) sont positionnés de chaque côté de la base inférieure 21A; d'autres modes de positionnement sont bien entendus envisageables ; à noter que ces freins de carte peuvent, de manière alternative et dans un autre mode de réalisation, être intégré dans le capot supérieur plutôt que dans la base inférieure ;
- elle est réalisée dans une matière dissipative, ce qui permet de limiter les effets de décharges électrostatiques sur un terminal de lecture ; cette caractéristique de décharge électrostatique peut être couplée à la caractéristique précédente : les lamelles, chacune avec une inclinaison différente, sont à même de freiner la carte d'une part et de la décharger de son électricité statique d'autre part, de manière progressive ;
- elle est réalisée dans une matière transparente, ou translucide, pour permettre d'éclairer la fente de façon homogène et rendre ainsi plus visible la zone d'accueil de la carte à mémoire pour un utilisateur ;
- elle comprend un élément de protection, sur sa face inférieure.

Ces caractéristiques complémentaires découlent astucieusement de la mise en oeuvre d'un corps de lecteur qui présente une fente d'insertion obtenue par l'assemblage de deux parties emboitables (base inférieure et capot supérieur). En effet, de telles caractéristiques ne peuvent pas être mise en oeuvre avec un corps de lecteur en une seule et unique partie car la technicité de ces caractéristiques l'en empêche. Ainsi, par exemple, il serait très compliqué (et coûteux) de réaliser un corps de lecteur qui comprendrait une portion transparente et une portion opaque. Dans le mode de réalisation présenté en relation avec les figures 6a et 6b, les parois latérales (61A, 61B) de la base inférieure 21A comprennent des passages 64 destinés à accueillir des pattes d'assemblage complémentaires du capot supérieur 21B (les pattes d'assemblage 32 des figures 3a et 3b). Ces pattes d'assemblage, lorsqu'elles sont métalliques, peuvent en outre être soudées sur la carte mère pour renforcer encore la robustesse du lecteur assemblé. D'autres modes de réalisation que celui illustré sont évidemment envisageables pour l'assemblage du capot supérieur 21B sur la base inférieure 21A.

### 5.3. Caractéristiques complémentaires et procédé d'assemblage

Selon une autre caractéristique particulière de la technique proposée, la connexion entre le circuit imprimé et la carte mère est réalisée par l'intermédiaire d'un connecteur élastomère, par exemple de type Zebra (marque déposée). Ainsi, il n'est pas nécessaire de disposer d'un mécanisme complexe de soudure du corps de lecteur de cartes à mémoire sur la carte mère : en effet, comme la connexion est assurée par l'intermédiaire d'un connecteur élastomère, le montage de l'ensemble connecteur de carte à mémoire, connecteur élastomère et corps de lecteur de cartes à mémoire est facilité. La vue en éclaté de la figure 2a montre un tel connecteur élastomère 22 et la manière dont il peut être mise en oeuvre dans un mode de réalisation particulier. Plus particulièrement, la base inférieure 21A et le capot supérieur 21B comprennent chacun un orifice permettant l'installation du connecteur élastomère 22 lors de l'assemblage du lecteur.

On décrit, en relation avec la figure 7, les principales étapes mises en oeuvre pour réaliser le montage d'un lecteur de cartes à mémoire, dans un mode de réalisation particulier de la technique proposée. Ainsi, le procédé d'assemblage du lecteur de cartes à mémoire comprend les étapes suivantes :
- une étape de fixation 71 du connecteur de carte à mémoire 20 sur une carte mère ; cette fixation peut être réalisée par vissage ou par soudure ou par collage ou par une combinaison de ces méthodes ; d'autres méthodes de fixation peuvent également être employées. ;
- une étape de pose 72 du connecteur élastomère, lorsqu'il est employé (le positionnement du connecteur élastomère peut avantageusement être réalisé dans une zone laissée libre à cet effet au sein du connecteur de carte à mémoire) ;
- une étape de pose 73 de la base inférieure sur le connecteur de carte à mémoire, de manière à ce que le connecteur de carte à mémoire prenne place au sein du logement qui lui est réservé dans la base inférieure ;
- une étape d'assemblage 74 du capot supérieur sur la base inférieure ;
- une étape de fixation 75 du circuit imprimé sur la face supérieure du capot supérieur ;
- optionnellement, une étape de fixation complémentaire 76 du lecteur de cartes à mémoire ainsi assemblé sur la carte mère, par exemple au moyen d'une vis traversante se prenant dans une partie du connecteur de carte à mémoire (vis 23 de la figure 2a).

Ainsi, il ne faut que quelques étapes simples pour assembler et fixer le lecteur de cartes à mémoire sur la carte mère. Comme cela a déjà été décrit précédemment, le circuit imprimé peut avoir été fixé sur le capot supérieur préalablement au montage du lecteur de cartes à mémoire. Dans ce cas, les étapes 74 et 75 sont remplacées par une étape unique d'assemblage, sur la base inférieure, du bloc pré-assemblé formé par le capot supérieur surmonté du circuit imprimé.

## Revendications

1. Corps de lecteur de cartes à mémoire (21) de forme globalement parallélépipédique rectangle comprenant une fente d'insertion (211) d'une carte à mémoire et un logement de réception d'un connecteur de carte à mémoire (20), ledit corps de lecteur (21) comprenant un capot supérieur (21B) et une base inférieure (21A), ladite fente d'insertion étant formée par l'assemblage dudit capot supérieur (21B) et de ladite base inférieure (21A), ledit logement de réception prenant la forme d'un orifice traversant la base inférieure 21A de part en part, ledit corps de lecteur de cartes à mémoire étant **caractérisé en ce que** ledit capot supérieur (21B) est en métal et **en ce qu'**il comprend en outre un circuit imprimé (21C) fixé sur une face supérieure dudit capot supérieur (21B), ledit circuit imprimé (21C) comprenant au moins un élément de protection se présentant sous la forme d'un ou de plusieurs treillis de détection d'intrusion ou sous la forme d'une ou de plusieurs pistes continues de détection d'intrusion.

2. Corps de lecteur de cartes à mémoire selon la revendication 1, **caractérisé en ce que** ledit circuit imprimé (21C) recouvre une majeure partie de la face supérieure dudit capot supérieur (21B).

3. Corps de lecteur de cartes à mémoire selon la revendication 1, **caractérisé en ce que** ledit élément de protection s'étend sensiblement sur une majeure partie dudit circuit imprimé (21C).

4. Corps de lecteur de cartes à mémoire selon la revendication 1, **caractérisé en ce que** la densité de gravure dudit élément de protection est variable, en fonction de la localisation dudit élément de protection.

5. Corps de lecteur de cartes à mémoire selon la revendication 1, **caractérisé en ce que** ledit capot supérieur (21B) comprend au moins une bosse (33) s'étendant sensiblement perpendiculairement à ladite face supérieure du capot supérieur.

6. Corps de lecteur de cartes à mémoire selon la revendication 1, **caractérisé en ce que** ledit capot supérieur (21B) comprend, à proximité d'un orifice traversant ledit capot supérieur, au moins une languette métallique (36, 37) s'étendant sensiblement perpendiculairement à une face inférieure du capot supérieur.

7. Corps de lecteur de cartes à mémoire selon la revendication 1, **caractérisé en ce que** ledit capot supérieur (21B) comprend au moins un mécanisme d'atterrissage carte.

8. Corps de lecteur de cartes à mémoire selon la revendication 7, **caractérisé en ce que** ledit mécanisme d'atterrissage carte comprend un contre-appui mobile (39), et **en ce que** ledit capot supérieur (21B) comprend un logement d'accueil dudit contre-appui mobile, ledit contre-appui mobile étant mobile entre deux positions :
- une position de lecture, dans laquelle ledit contre-appui mobile exerce une pression sur une carte à mémoire insérée dans la fente d'insertion du lecteur de cartes à mémoire;
- une position d'attente, dans laquelle ledit contre-appui mobile est au moins partiellement disposé dans ledit logement d'accueil.

9. Corps de lecteur de cartes à mémoire selon la revendication 8, **caractérisé en ce que** ledit logement d'accueil du contre-appui mobile (39) prend la forme d'un orifice au sein dudit capot supérieur (21B).

10. Corps de lecteur de cartes à mémoire selon la revendication 1 **caractérisé en ce que** ladite base inférieure (21A) comprend au moins un dispositif de freinage de carte (63A, 63B).

11. Corps de lecteur de cartes à mémoire selon la revendication 1 **caractérisé en ce que** ladite base inférieure (21A) comprend au moins une zone de décharge électrostatique.

12. Terminal de lecture de cartes à mémoire **caractérisé en ce qu'**il comprend un corps de lecteur de cartes à mémoire selon l'une quelconque des revendications 1 à 11.

13. Procédé d'assemblage d'un corps de lecteur de cartes à mémoire selon l'une quelconque des revendications 1 à 11, **caractérisé en ce qu'**il comprend :
- une étape de fixation (71) d'un connecteur de carte à mémoire (20) sur une carte mère;
- une étape de pose (73) de la base inférieure (21A) sur ledit connecteur de carte à mémoire (20) ;
- une étape d'assemblage (74) du capot supérieur (21B) sur ladite base inférieure (21A) ;
- une étape de fixation (75) du circuit imprimé (21C) sur la face supérieure dudit capot supérieur (21B).

## Patentansprüche

1. Körper eines Lesegeräts für Speicherkarten (21) von insgesamt rechteckiger parallelepipedischer Form, der einen Schlitz zum Einführen (211) einer Speicherkarte und ein Gehäuse für die Aufnahme eines Steckers für die Speicherkarte (20) umfasst, wobei der Lesegerätkörper (21) eine obere Abdeckung (21B) und eine untere Basis (21A) umfasst,
wobei der Einführungsschlitz durch das Zusammenfügen der oberen Abdeckung (21B) und der unteren Basis (21A) gebildet wird, wobei das Aufnahmegehäuse die Form einer Öffnung annimmt, die durch die untere Basis (21A) von einer Seite zur anderen hindurchgeht, wobei der Speicherkartenlesegerätkörper **dadurch gekennzeichnet ist, dass** die obere Abdeckung (21B) aus Metall besteht und ferner eine Leiterplatte (21C) umfasst, die an einer Oberseite der oberen Abdeckung (21B) befestigt ist,
wobei die Leiterplatte (21C) mindestens ein Schutzelement umfasst, das in Form eines oder mehrerer Drahtgeflechte zur Intrusionserkennung vorliegt oder in Form einer oder mehrerer kontinuierlicher Bahnen zur Intrusionserkennung.

2. Speicherkartenlesegerätkörper nach Anspruch 1, **dadurch gekennzeichnet, dass** die Leiterplatte (21C) einen Großteil der Oberseite der oberen Abdeckung (21B) bedeckt.

3. Speicherkartenlesegerätkörper nach Anspruch 1, **dadurch gekennzeichnet, dass** sich das Schutzelement im Wesentlichen über einen Großteil der Leiterplatte (21C) erstreckt.

4. Speicherkartenlesegerätkörper nach Anspruch 1, **dadurch gekennzeichnet, dass** die Ätzdichte des Schutzelements in Abhängigkeit von der Lage des Schutzelements variabel ist.

5. Speicherkartenlesegerätkörper nach Anspruch 1, **dadurch gekennzeichnet, dass** die obere Abdeckung (21B) mindestens eine Einbeulung (33) umfasst, die sich im Wesentlichen senkrecht zur Oberseite der oberen Abdeckung erstreckt.

6. Speicherkartenlesegerätkörper nach Anspruch 1, **dadurch gekennzeichnet, dass** die obere Abdeckung (21B) in der Nähe einer Öffnung, die durch die obere Abdeckung hindurchgeht, mindestens eine Metalllasche (36, 37) umfasst, die sich im Wesentlichen senkrecht zu einer Unterseite der oberen Abdeckung erstreckt.

7. Speicherkartenlesegerätkörper nach Anspruch 1, **dadurch gekennzeichnet, dass** die obere Abdeckung (21B) mindestens einen Kartenankunftsmechanismus umfasst.

8. Speicherkartenlesegerätkörper nach Anspruch 7, **dadurch gekennzeichnet, dass** der Kartenankunftsmechanismus ein bewegliches Gegenlager (39) umfasst, und dass die obere Abdeckung (21B) ein Aufnahmegehäuse für das bewegliche Gegenlager umfasst, wobei das bewegliche Gegenlager zwischen zwei Positionen beweglich ist:
- einer Leseposition, in der das bewegliche Gegenlager Druck auf eine Speicherkarte ausübt, die in den Einführungsschlitz des Speicherkartenlesegeräts eingeführt ist;
- einer Warteposition, in der das bewegliche Gegenlager mindestens teilweise im Aufnahmegehäuse angeordnet ist.

9. Speicherkartenlesegerätkörper nach Anspruch 8, **dadurch gekennzeichnet, dass** das Aufnahmegehäuse des beweglichen Gegenlagers (39) die Form einer Öffnung innerhalb der oberen Abdeckung (21B) annimmt.

10. Speicherkartenlesegerätkörper nach Anspruch 1, **dadurch gekennzeichnet, dass** die untere Basis (21A) mindestens eine Kartenbremsvorrichtung (63A, 63B) umfasst.

11. Speicherkartenlesegerätkörper nach Anspruch 1, **dadurch gekennzeichnet, dass** die untere Basis (21A) mindestens eine elektrostatische Entladungszone umfasst.

12. Speicherkartenleseterminal, **dadurch gekennzeichnet, dass** es einen Speicherkartenlesegerätkörper nach einem der Ansprüche 1 bis 11 umfasst.

13. Verfahren zum Zusammenfügen eines Speicherkartenlesegerätkörpers nach einem der Ansprüche 1 bis 11, **dadurch gekennzeichnet, dass** es umfasst:
- einen Schritt zum Befestigen (71) eines Speicherkartensteckers (20) an einer Grundplatine;
- einen Schritt zum Einbauen (73) der unteren Basis (21A) auf dem Speicherkartenstecker (20);
- einen Schritt (74) zum Zusammenfügen der oberen Abdeckung (21B) mit der unteren Basis (21A);
- einen Schritt zum Befestigen (75) der Leiterplatte (21C) auf der Oberseite der oberen Abdeckung (21B).

## Claims

1. Memory card reader body (21) of generally rectangular parallelepiped shape comprising an insertion slot (211) for a memory card and a housing for receiving a memory card connector (20), said body of reader (21) comprising an upper cover (21B) and a lower base (21A), said insertion slot being formed by the assembly of said upper cover (21B) and of said lower base (21A), said housing for receiving taking the form of a hole traversing through the lower base (21A) from one side to another side, said memory card reader body being **characterized in that** said upper cover (21B) is made of metal and **in that** it further comprises a printed circuit (21C) fixed on an upper face of said upper cover (21B), said printed circuit (21C) comprising at least one protective element presenting the form of one or several intrusion detection lattice or the form of one or several intrusion detection continuous track.

2. Memory card reader body according to claim 1, **characterized in that** said printed circuit (21C) covers a major part of the upper face of said upper cover (21B).

3. Memory card reader body according to claim 1, **characterized in that** said protection element extends substantially over a major part of said printed circuit (21C).

4. Memory card reader body according to claim 1, **characterized in that** the engraving density of said protective element is variable, depending on the location of said protective element.

5. Memory card reader body according to claim 1, **characterized in that** said upper cover (21B) comprises at least one bump (33) extending substantially perpendicular to said upper face of the upper cover.

6. Memory card reader body according to claim 1, **characterized in that** said upper cover (21B) comprises, near an orifice passing through said upper cover, at least one metal tab (36, 37) extending substantially perpendicularly to a lower face of the upper cover.

7. Memory card reader body according to claim 1, **characterized in that** said upper cover (21B) comprises at least one card landing mechanism.

8. Memory card reader body according to claim 7, **characterized in that** said card landing mechanism comprises a movable counter-support (39), and **in that** said upper cover (21B) comprises a housing for receiving said counter-support-mobile support, said movable counter-support being movable between two positions:
- a reading position, in which said movable counter-support exerts pressure on a memory card inserted in the insertion slot of the memory card reader;
- a waiting position, in which said movable counter-support is at least partially arranged in said reception housing.

9. Memory card reader body according to claim 8, **characterized in that** said housing for receiving the movable counter-support (39) takes the form of an orifice within said upper cover (21B).

10. Memory card reader body according to claim 1 **characterized in that** said lower base (21A) comprises at least one card braking device (63A, 63B).

11. Memory card reader body according to claim 1 **characterized in that** said lower base (21A) comprises at least one electrostatic discharge zone.

12. Memory card reading terminal **characterized in that** it comprises a memory card reader body according to any one of claims 1 to 11.

13. Method of assembling a memory card reader body according to any one of claims 1 to 11, **characterized in that** it comprises:
- a step of fixing (71) a memory card connector (20) on a motherboard;
- a step of placing (73) the lower base (21A) on said memory card connector (20);
- a step of assembling (74) the upper cover (21B) on said lower base (21A);
- a step of fixing (75) the printed circuit (21C) on the upper face of said upper cover (21B).
